# EUROPEAN PATENT SPECIFICATION

(11) **EP 3 393 074 B1**
(45) Date of publication and mention of the grant of the patent: **02.09.2020**
(21) Application number: 18168437.4
(22) Date of filing: 20.04.2018
(51) Int. Cl.: H04L 5/00, H04W 72/04

(54) **DEVICE FOR HANDLING COMMON SEARCH SPACES**
VORRICHTUNG ZUR HANDHABUNG GEMEINSAMER SUCHRÄUME
DISPOSITIF PERMETTANT DE MANIPULER DES ESPACES DE RECHERCHE COMMUNE

(30) Priority: 21.04.2017 US 201762488070 P
(43) Date of publication of application: 24.10.2018
(73) Proprietor: HTC Corporation, Taoyuan City 330, (TW)
(72) Inventor: TANG, Chien-Hsin, 330 Taoyuan City (TW)
(74) Representative: Schmidbauer, Andreas Konrad

(56) References cited:
- NTT DOCOMO ET AL: "Search space configuration", 3GPP DRAFT; R1-1705737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243852, Retrieved from the Internet: URL:http://www.3gpp.org/ftp/Meetings_3GPP_ SYNC/RAN1/Docs/ [retrieved on 2017-04-02]
- ZTE ET AL: "NR DL Control Channel Structure", 3GPP DRAFT; R1-1701585 NR DL CONTROL CHANNEL STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208752, Retrieved from the Internet: URL:http://www.3gpp.org/ftp/Meetings_3GPP_ SYNC/RAN1/Docs/ [retrieved on 2017-02-12]
- HUAWEI ET AL: "Search space design aspects", 3GPP DRAFT; R1-1701640, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208807, Retrieved from the Internet: URL:http://www.3gpp.org/ftp/Meetings_3GPP_ SYNC/RAN1/Docs/ [retrieved on 2017-02-12]
- INTEL CORPORATION: "General aspects for NR search space", 3GPP DRAFT; R1-1704746 INTEL NRSEARCHSPACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051242884, Retrieved from the Internet: URL:http://www.3gpp.org/ftp/Meetings_3GPP_ SYNC/RAN1/Docs/ [retrieved on 2017-04-02]
- MEDIATEK INC: "Common PDCCH design", 3GPP DRAFT; R1-1702717 COMMON PDCCH DESIGN_CLEAN-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209864, Retrieved from the Internet: URL:http://www.3gpp.org/ftp/Meetings_3GPP_ SYNC/RAN1/Docs/ [retrieved on 2017-02-12]

## Description

### Background of the Invention

### 1. Field of the Invention

The present invention relates to a device and a method used in a wireless communication system, and more particularly, to a device and a method of handling common search spaces (CSSs) in a wireless communication system.

### 2. Description of the Prior Art

A control resource set (CORESET) and at least one search space in a slot are configured for a communication device such that the communication device can receive a downlink (DL) control information (DCI) from a base station (BS) in the slot. However, when the BS transmits messages to multiple (or all) communication devices in a cell, if these communication devices have been configured to receive DCIs in search spaces in different CORESETs, respectively, the same DCI is transmitted in different CORESETs and time-frequency resources are wasted.

NTT DOCOMO ET AL, "Search space configuration", RAN WG1, Spokane, USA; 2 April 2017, 3GPP DRAFT; R1-1705737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discusses search space configuration for NR-PDCCH monitoring.

ZTE ET AL, "NR DL Control Channel Structure", RAN WG1, Athens, Greece; 12 February 2017, 3GPP DRAFT; R1-1701585 NR DL CONTROL CHANNEL STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discusses NR PDCCH structure and control resource set configuration.

### Summary of the Invention

The present invention therefore provides a communication device for handling CSSs to solve the abovementioned problem.

According to an aspect of the present invention, a base station, BS, for handling a plurality of common search spaces, CSS, is provided as set forth in claim 1.

According to another aspect of the present invention, a communication device for handling a plurality of common search spaces, CSS, is provided as set forth in claim 9.

Preferred embodiments of the present invention may be gathered from the dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a schematic diagram of a time-frequency resource of two CORESETs according to an example of the present invention.
Fig. 6 is a flowchart of a process according to an example of the present invention.
Fig. 7 is a flowchart of a process according to an example of the present invention.
Fig. 8 is a schematic diagram of a CORESET according to an example of the present invention.
Fig. 9 is a schematic diagram of a CORESET according to an example of the present invention.

### Detailed Description

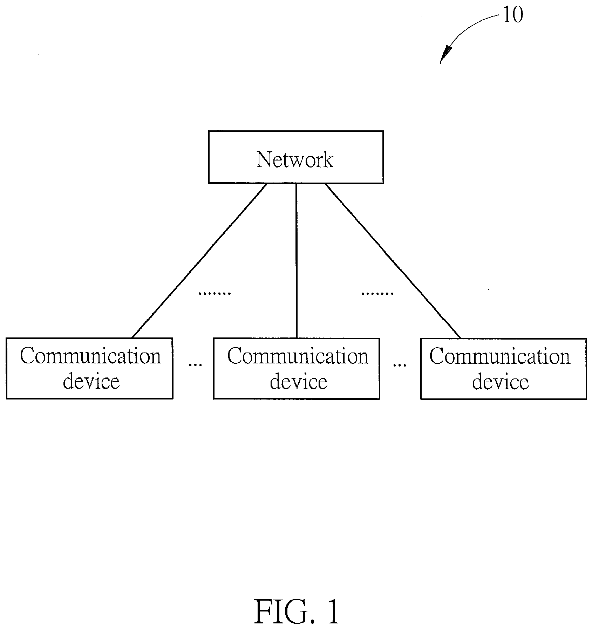

Fig. 1 is a schematic diagram of a wireless communication system 10 according to an example of the present invention. The wireless communication system 10 is composed of a network and a plurality of communication devices. The network and a communication device may communicate with each other via one or more carriers of licensed band(s) and/or unlicensed band(s). The network and the communication device may communicate with each other via one or multiple cells (e.g., multiple carriers) belonging to one or multiple base stations (BSs).

In Fig. 1, the network and the communication devices are simply utilized for illustrating the structure of the wireless communication system 10. Practically, the network may comprise at least one of a long-term evolution (LTE) network and a new radio (NR) network. The LTE network may comprise at least one of an evolved universal terrestrial radio access network (E-UTRAN) including at least one evolved Node-B (eNB) and an Evolved Packet Core (EPC). The NR network may comprise a fifth generation (5G) radio access network including at least one 5G BS (called gNB or an evolved eNB (eLTE eNB)) and a Next Generation Core (NGC).

A communication device may be a user equipment (UE), a machine type communication (MTC) device, a mobile phone, a laptop, a tablet computer, an electronic book, a portable computer system, a vehicle, or an aircraft. In addition, the network and the communication device can be seen as a transmitter or a receiver according to direction of transmission (i.e., transmission direction), e.g., for an uplink (UL), the communication device is the transmitter and the network is the receiver, and for a downlink (DL), the network is the transmitter and the communication device is the receiver.

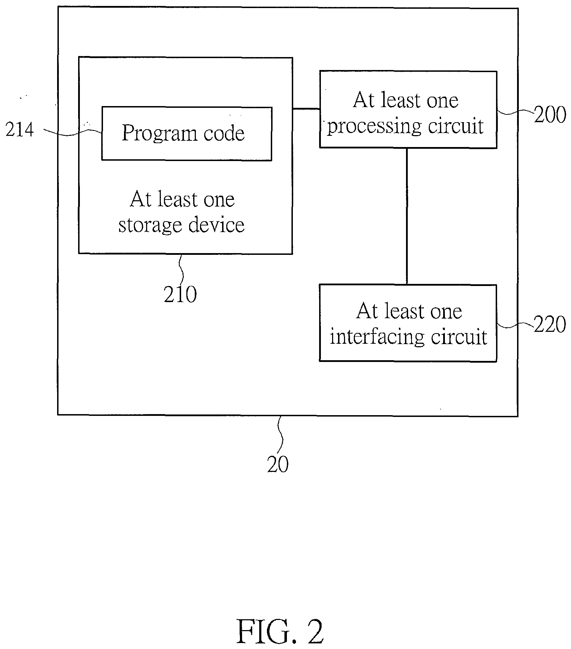

Fig. 2 is a schematic diagram of a communication device 20 according to an example of the present invention. The communication device 20 may be a communication device or the network shown in Fig. 1, but is not limited herein. The communication device 20 may include at least one processing circuit 200 of which each may be a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 comprises at least one transceiver used to transmit and receive signals (e.g., data, messages and/or packets) according to processing results of the at least one processing circuit 200.

In order to enable UEs with different bandwidth capabilities to efficiently access the same new radio (NR) carrier irrespective of the NR carrier bandwidth, a NR system supports a control region of which the bandwidth is smaller than a carrier bandwidth. The control region may be termed as a control resource set (CORESET) (or a control subband). A carrier bandwidth may include at least one CORESET, and each UE may attempt to blindly decode a DL control information (DCI) in a certain CORESET in a slot. In addition, a UE may be configured to decode a DCI in the at least one CORESET. In a frequency domain, a CORESET comprises several physical resource blocks (PRBs). These PRBs may or may not be frequency contiguous such that a BS can transmit a DCI in distributed PRBs to provide frequency diversity.

As in a LTE system, a structure of a control region is based on control-channel elements (CCEs). The control region includes a number of CCEs. One physical DL control channel (PDCCH) may use 1, 2, 4, or 8 CCEs to transmit a DCI. The number of CCEs for a PDCCH (called aggregation level) depends on a channel-coding rate and a size of a DCI payload. Accordingly, a dynamic rate control for a PDCCH may be performed. For example, in situations with disadvantageous channel conditions for a UE, a BS can use a larger number of CCEs (lower code rate) to transmit a DCI to the UE compared with situations with advantageous channel conditions.

A CCE is the smallest unit of a blind decoding attempt. A UE blindly decodes a DCI in 1, 2, 4 and 8 CCEs, which are at different aggregation levels, respectively. Although a CCE structure reduces the number of blind decoding attempts, the reduction may not be sufficient. Monitoring all CCEs in the control region results an impact on the implementation complexity of the UE. Therefore, in order to limit the number of CCEs at each aggregation level that the UE is supposed to monitor, a search space is defined for the LTE system. A search space is a set of candidate control channels formed by CCEs at a given aggregation level, which a UE is supposed to attempt to decode. Because the search spaces should differ for different UEs, each UE in a cell has a UE-specific search space (USS) at each aggregation level. In addition, a common search space (CSS) is also defined for the control region in the LTE system to let multiple UEs be addressed at the same time. Specifically, in the LTE system, a CSS at a given aggregation level is a set of candidate control channels formed by CCEs which is monitored by all UEs in a cell. The use of the CSS may provide necessary system information for multiple UEs in a cell. Therefore, in addition to USSs, each UE must blindly monitor the CSSs for a PDCCH in a slot.

A group CSS is defined as a search space monitored by part of the UEs in the cell. Several methods are proposed for applying group CSSs.

In the following embodiments, a UE is used for representing a communication device in Fig. 1, to simplify the illustration of the embodiments.

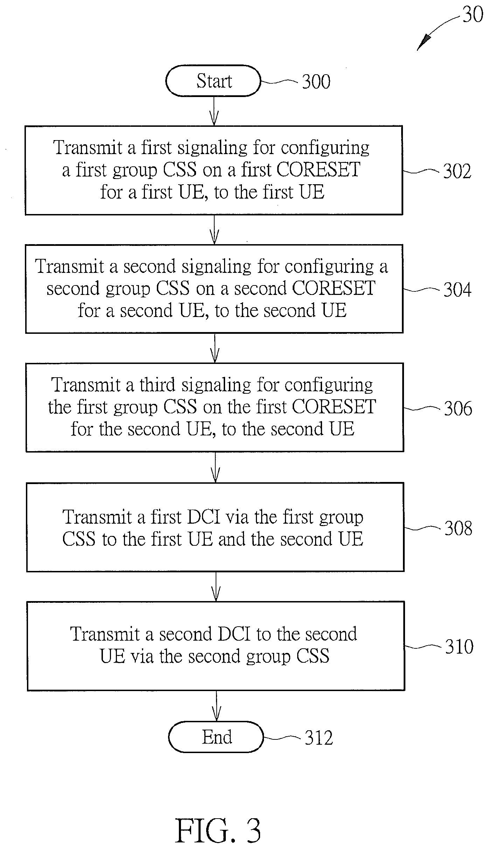

Fig. 3 is a flowchart of a process 30 according to an example of the present invention. The process 30 can be utilized in a BS, for handling a plurality of CSSs. The process 30 includes the following steps:

| | |
|---|---|
| Step 300: | Start. |
| Step 302: | Transmit a first signaling for configuring a first group CSS on a first CORESET for a first UE, to the first UE. |
| Step 304: | Transmit a second signaling for configuring a second group CSS on a second CORESET for a second UE, to the second UE. |
| Step 306: | Transmit a third signaling for configuring the first group CSS on the first CORESET for the second UE, to the second UE. |
| Step 308: | Transmit a first DCI via the first group CSS to the |
| | first UE and the second UE. |
| Step 310: | Transmit a second DCI to the second UE via the second group CSS. |
| Step 312: | End. |

According to the process 30, the BS transmits a first signaling for configuring a first group CSS on a first CORESET for a first UE, to the first UE. The BS transmits a second signaling for configuring a second group CSS on a second CORESET for a second UE, to the second UE. The BS transmits a third signaling for configuring the first group CSS on the first CORESET for the second UE, to the second UE. Then, the BS transmits a first DCI via the first group CSS to the first UE and the second UE. The BS transmits a second DCI to the second UE via the second group CSS. That is, a specific group CSS is configured for multiple UEs to receive a specific DCI. The BS configures multiple UEs (e.g., the first UE and the second UE) to monitor the same group CSS (e.g., the first group CSS) so that the UEs receive the same DCI (e.g., the first DCI) on the same time-frequency resource, and the waste of the time-frequency resource is reduced.

Realization of the process 30 is not limited to the above description. The following examples may be applied to the process 30.

In one example, the first signaling is a random access response (RAR) signaling, a Msg. 4 signaling or a radio resource control (RRC) signaling. In one example, the first signaling comprises first information of at least one of a time-frequency location of the first CORESET, a plurality of PDCCH candidates of the first group CSS, an aggregation level of the first group CSS, and a number of the plurality of PDCCH candidates for the first group CSS.

In one example, the second signaling is a RAR signaling, a Msg. 4 signaling or a RRC signaling. In one example, the second signaling comprises second information of at least one of a time-frequency location of the second CORESET, a plurality of PDCCH candidates of the second group CSS, an aggregation level of the second group CSS, and a number of the plurality of PDCCH candidates for the second group CSS.

In one example, the third signaling and the first signaling is a same signaling or different signalings.

In one example, the BS transmits the first signaling for configuring the first group CSS on the first CORESET for a third UE, to the third UE, and transmits the first DCI via the first group CSS to the third UE. That is, the first UE and the third UE can be seen as the UEs in a same UE group which is defined as a group of UEs whose search spaces are configured in the same time-frequency resource by the BS. The BS configures the UEs in the same UE group to receive the same DCI (s) via the same group CSS on the same CORESET.

In one example, the BS transmits the second signaling for configuring the second group CSS on the second CORESET for a fourth UE, to the fourth UE. The BS transmits the third signaling for configuring the first group CSS on the first CORESET for the fourth UE, to the fourth UE. The BS transmits the first DCI to the fourth UE via the first group CSS. The BS transmits the second DCI to the fourth UE via the second group CSS. That is, the second UE and the fourth UE can be seen as the UEs in a same UE group. The BS configures the UEs in the same UE group to receive the same DCI(s) via the same group CSS on the same CORESET.

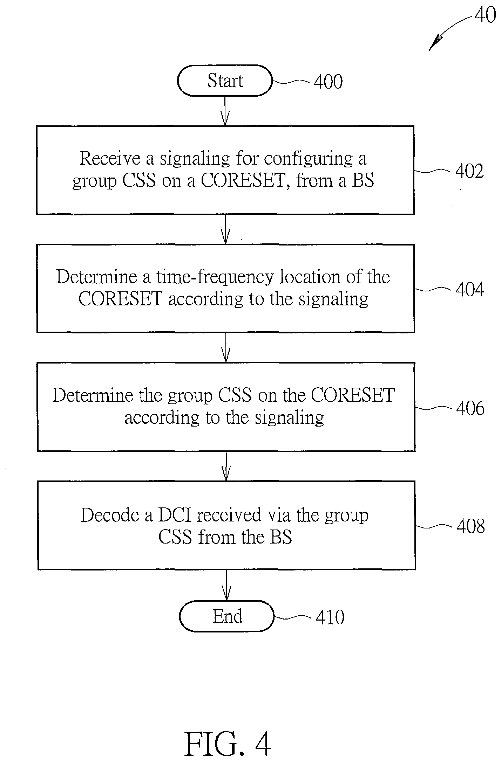

Fig. 4 is a flowchart of a process 40 according to an example of the present invention. The process 40 can be utilized in a UE, for handling a plurality of CSSs. The process 40 includes the following steps:

| | |
|---|---|
| Step 400: | Start. |
| Step 402: | Receive a signaling for configuring a group CSS on |
| | a CORESET, from a BS. |
| Step 404: | Determine a time-frequency location of the CORESET according to the signaling. |
| Step 406: | Determine the group CSS on the CORESET according to the signaling. |
| Step 408: | Decode a DCI received via the group CSS from the BS. |
| Step 410: | End. |

According to the process 40, the UE receives a signaling for configuring a group CSS on a CORESET, from a BS. Then, the UE determines a time-frequency location of the CORESET and determines the group CSS on the CORESET according to the signaling. The UE (e.g., blindly) decodes a DCI received via the group CSS from the BS. That is, the UE is configured to monitor an individual group CSS and to decode the DCI received on the individual group CSS from the BS.

Realization of the process 40 is not limited to the above description. The following examples may be applied to the process 40.

In one example, the signaling is a RAR signaling, a Msg.4 signaling or a RRC signaling.

In one example, the UE determines at least one of a plurality of PDCCH candidates of the group CSS, an aggregation level of the group CSS, and a number of the plurality of PDCCH candidates for the group CSS, according to the signaling.

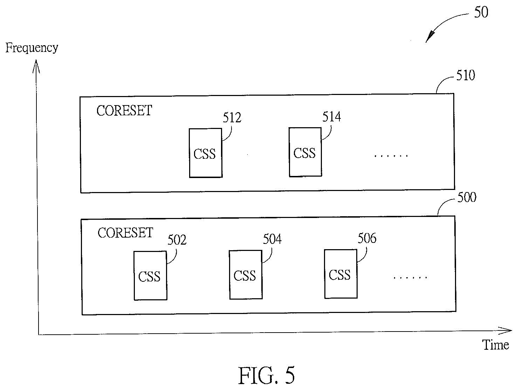

Fig. 5 is a schematic diagram of a time-frequency resource 50 of two CORESETs according to an example of the present invention. There are two CORESETs 500 and 510 in the time-frequency resource 50. A BS configures a first plurality of UEs to monitor a first group CSS including the CSSs 502, 504 and 506 on the CORESET 500. The BS configures a second plurality of UEs to monitor the first group CSS including the CSSs 502, 504 and 506 on the CORESET 500 and a second group CSS including the CSSs 512 and 514 on the CORESET 510. The CSSs 502, 504 and 506 on the CORESET 500 are monitored by both the first plurality of UEs and the second plurality of UEs. Since the first plurality of UEs and the second plurality of UEs are able to monitor a DCI on the same CSS (i.e., the CSS 502, the CSS 504 or the CSS 506) on the CORESET 500, the BS transmits a DCI to the first plurality of UEs and the second plurality of UEs via one of the CSSs on the CORESET 500.

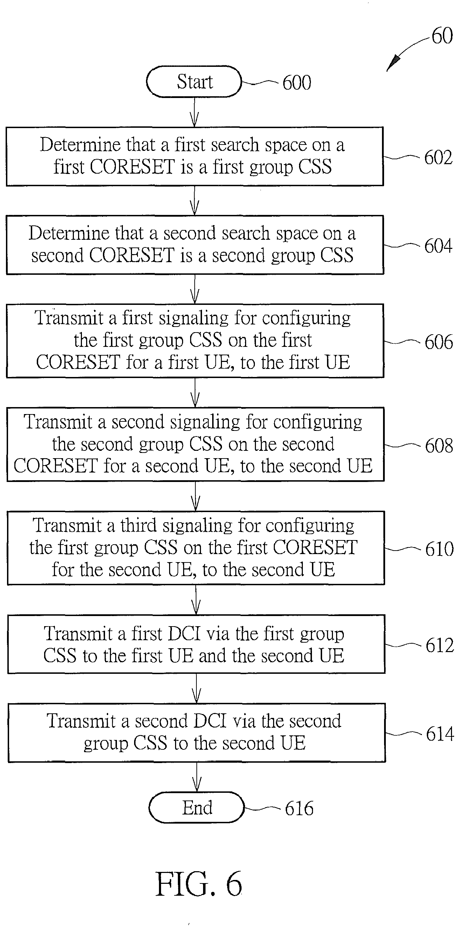

Fig. 6 is a flowchart of a process 60 according to an example of the present invention. The process 60 can be utilized in a BS, for handling a plurality of CSSs. The process 60 includes the following steps:

| | |
|---|---|
| Step 600: | Start. |
| Step 602: | Determine that a first search space on a first CORESET is a first group CSS. |
| Step 604: | Determine that a second search space on a second CORESET is a second group CSS. |
| Step 606: | Transmit a first signaling for configuring the first group CSS on the first CORESET for a first UE, to the first UE. |
| Step 608: | Transmit a second signaling for configuring the second group CSS on the second CORESET for a second UE, to the second UE. |
| Step 610: | Transmit a third signaling for configuring the first group CSS on the first CORESET for the second UE, to the second UE. |
| Step 612: | Transmit a first DCI via the first group CSS to the first UE and the second UE. |
| Step 614: | Transmit a second DCI via the second group CSS to the second UE. |
| Step 616: | End. |

According to the process 60, the BS determines (e.g., pre-determines) that a first search space on a first CORESET is a first group CSS, and determines (e.g., pre-determines) that a second search space on a second CORESET is a second group CSS. Then, the BS transmits a first signaling for configuring the first group CSS on the first CORESET for a first UE, to the first UE. The BS transmits a second signaling for configuring the second group CSS on the second CORESET for a second UE, to the second UE. The BS transmits a third signaling for configuring the first group CSS on the first CORESET for the second UE, to the second UE. The BS transmits a first DCI via the first group CSS to the first UE and the second UE. The BS transmits a second DCI via the second group CSS to the second UE. That is, a specific group CSS is configured for one or multiple UEs to receive a specific DCI. The BS configures multiple UEs (i.e., the first UE and the second UE) to monitor the same group CSS (i.e., the first group CSS) so that the UEs receive the same DCI (i.e., the first DCI) on the same time-frequency resource, which reduces the waste of the time-frequency resource

Realization of the process 60 is not limited to the above description. The following examples may be applied to the process 60.

In one example, the first CORESET may be the second CORESET.

In one example, the first signaling is a RAR signaling, a Msg. 4 signaling or a RRC signaling. In one example, the first signaling comprises first information of at least one of a time-frequency location of the first CORESET and which set of search spaces the first group CSS belongs to.

In one example, the second signaling is a RAR signaling, a Msg.4 signaling or a RRC signaling. In one example, the second signaling comprises second information of at least one of a time-frequency location of the second CORESET and which set of search spaces the second group CSS belongs to.

In one example, the first signaling and the third signaling is a same signaling or different signalings.

In one example, the BS transmits the first signaling for configuring the first group CSS on the first CORESET for a third UE, to the third UE, and transmits the first DCI via the first group CSS to the third UE. That is, the first UE and the third UE can be seen as the UEs in a same UE group. The BS configures the UEs in the same UE group to receive the same DCI (s) via the same group CSS on the same CORESET.

In one example, the BS transmits the second signaling for configuring the second group CSS on the second CORESET for a fourth UE, to the fourth UE. The BS transmits the third signaling for configuring the first group CSS on the first CORESET for the fourth UE, to the fourth UE. The BS transmits the first DCI to the fourth UE via the first group CSS. The BS transmits the second DCI to the fourth UE via the second group CSS. That is, the second UE and the fourth UE can be seen as the UEs in a same UE group. The BS configures the UEs in the same UE group to receive the same DCI(s) via the same group CSS on the same CORESET.

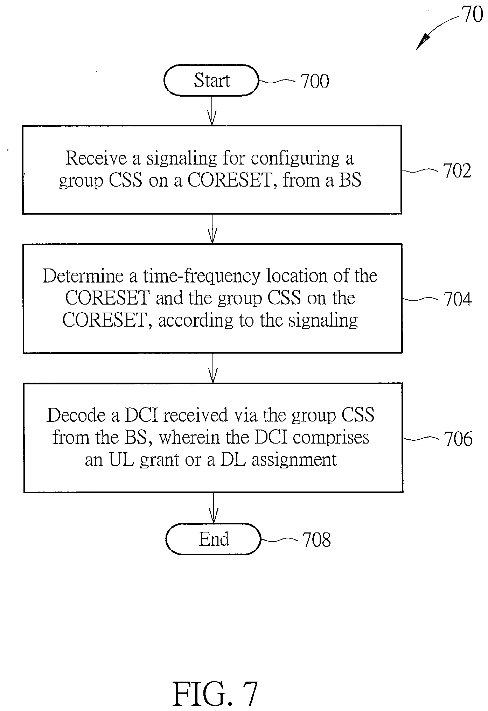

Fig. 7 is a flowchart of a process 70 according to an example of the present invention. The process 70 can be utilized in a UE, for handling a plurality of CSSs. The process 70 includes the following steps:

| | |
|---|---|
| Step 700: | Start. |
| Step 702: | Receive a signaling for configuring a group CSS on a CORESET, from a BS. |
| Step 704: | Determine a time-frequency location of the CORESET and the group CSS on the CORESET, according to the signaling. |
| Step 706: | Decode a DCI received via the group CSS from the BS, wherein the DCI comprises an UL grant or a DL |
| | assignment. |
| Step 708: | End. |

According to the process 70, the UE receives a signaling for configuring a group CSS on a CORESET, from a BS. Then, the UE determines a time-frequency location of the CORESET and the group CSS on the CORESET, according to the signaling. The UE (e.g., blindly) decodes a DCI received via the group CSS from the BS, wherein the DCI comprises an UL grant or a DL assignment.

Realization of the process 70 is not limited to the above description. The following examples may be applied to the process 70.

In one example, the signaling is a RAR signaling, a Msg.4 signaling or a RRC signaling.

In one example, the UE determines at least one of a plurality of PDCCH candidates of the group CSS, an aggregation level of the group CSS, and a number of the plurality of PDCCH candidates for the group CSS, according to the signaling.

In one example, the UE transmit a physical UL shared channel (PUSCH) to the BS according to the UL grant. The UE receives a physical DL shared channel (PDSCH) from the BS according to the DL assignment.

In one example, the group CSS is pre-allocated on the CORESET by the BS.

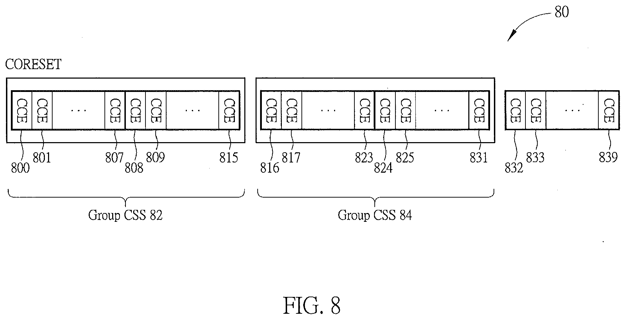

Fig. 8 is a schematic diagram of a CORESET 80 according to an example of the present invention. The aggregation level is 8. There are 40 CCEs 800, 801, ..., and 839 on the CORESET 80. A BS configures the first plurality of UEs to monitor a group CSS 82 including the CCEs 800, 801, ... , and 815. The BS configures the second plurality of UEs to monitor a group CSS 84 including the CCEs 816, 817, ... , and 831. The BS transmits a first DCI to the first plurality of UEs via the CCEs 800, 801, ..., and 815 on the CORESET 80, and transmits a second DCI to the second plurality of UEs via the CCEs 816, 817, ..., and 831 on the CORESET 80.

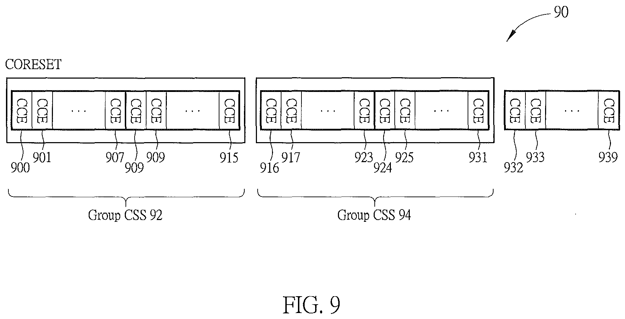

Fig. 9 is a schematic diagram of a CORESET 90 according to an example of the present invention. The aggregation level is 8. There are 40 CCEs 900, 901, ..., and 939 on the CORESET 90. A BS configures the first plurality of UEs to monitor a group CSS 92 including the CCEs 900, 901, ..., and 915. The BS configures the second plurality of UEs to monitor the group CSS 92 including the CCEs 900, 901, ... , and 915, and to monitor a group CSS 94 including CCEs 916, 917, ... , and 931. Since the first plurality of UEs and the second plurality of UEs are both able to monitor the group CSS 92 including the CCEs 900, 901, ..., and 915 on the CORESET 90, the BS transmits a first DCI to both the first plurality of UEs and the second plurality of UEs via the CCEs 900, 901, ..., and 915 on the CORESET 90. The BS transmits a second DCI to the second plurality of UEs via the CCEs 916, 917, ..., and 931 on the CORESET.

Those skilled in the art should readily make combinations, modifications and/or alterations on the abovementioned description and examples. For example, the skilled person easily makes new embodiments of the network based on the embodiments and examples of the UE, and makes new embodiments of the UE based on the embodiments and examples of the network. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program codes 214.

To sum up, the present invention provides methods and devices for handling CSSs. The BS and the UEs are able to communicate with each other via the group CSS according to the DCI. The time-frequency resource is saved with this method. Thus, the problem in the art is solved.
Those skilled in the art will readily observe that numerous modifications and alterations of the device and method may be made while retaining the teachings of the invention. Accordingly, the above disclosure should be construed as limited only by the appended claims.

## Claims

1. A base station, BS, for handling a plurality of common search spaces, CSS, the BS comprising:
at least one storage device (210); and
at least one processing circuit (200), coupled to the at least one storage device (210), wherein the at least one storage device (210) stores, and the at least one processing circuit (200) is configured to execute, instructions of:
transmitting (302) a first signaling for configuring a first group CSS on a first control resource set, CORESET, for a first communication device, to the first communication device;
transmitting (304) a second signaling for configuring a second group CSS on a second CORESET for a second communication device, to the second communication device;
transmitting (306) a third signaling for configuring the first group CSS on the first CORESET for the second communication device, to the second communication device;
transmitting (308) a first downlink, DL, control information, DCI, via the first group CSS to the first communication device and the second communication device; and
transmitting (310) a second DCI to the second communication device via the second group CSS.

2. The BS of claim 1, wherein the first signaling is a random access response, RAR, signaling, a Msg.4 signaling or a radio resource control, RRC, signaling.

3. The BS of claim 1, wherein the first signaling comprises first information of at least one of a time-frequency location of the first CORESET, a plurality of physical DL control channel, PDCCH, candidates of the first group CSS, an aggregation level of the first group CSS, and a number of the plurality of PDCCH candidates for the first group CSS.

4. The BS of claim 1, wherein the second signaling is a RAR signaling, a Msg.4 signaling or a RRC signaling.

5. The BS of claim 1, wherein the second signaling comprises second information of at least one of a time-frequency location of the second CORESET, a plurality of PDCCH candidates of the second group CSS, an aggregation level of the second group CSS, and a number of the plurality of PDCCH candidates for the second group CSS.

6. The BS of claim 1, wherein the first signaling and the third signaling is a same signaling.

7. The BS of claim 1, wherein the instructions further comprise:
transmitting the first signaling for configuring the first group CSS on the first CORESET for a third communication device, to the third communication device; and
transmitting the first DCI via the first group CSS to the third communication device.

8. The BS of claim 1, wherein the instructions further comprise:
transmitting the second signaling for configuring the second group CSS on the second CORESET for a fourth communication device, to the fourth communication device;
transmitting the third signaling for configuring the first group CSS on the first CORESET for the fourth communication device, to the fourth communication device;
transmitting the first DCI to the fourth communication device via the first group CSS; and
transmitting the second DCI to the fourth communication device via the second group CSS.

9. A communication device (20) for handling a plurality of common search spaces, CSS, the communication device (20) comprising:
at least one storage device (210); and
at least one processing circuit (200), coupled to the at least one storage device (210), wherein the at least one storage device (210) stores, and the at least one processing circuit (200) is configured to execute, instructions of:
receiving a first signaling for configuring a first group CSS on a first control resource set, CORESET, from a base station, BS;
receiving a second signaling for configuring a second group CSS on a second control resource set, CORESET, from the base station, BS;
determining a first time-frequency location of the first CORESET according to the first signaling; determining a second time-frequency location of the second CORESET according to the second signaling;
determining the first group CSS on the first CORESET according to the first signaling; determining the second group CSS on the second CORESET according to the second signaling;
decoding a first downlink, DL, control information, DCI, received via the first group CSS from the BS; and decoding a second DCI received via the second group CSS from the BS.

10. The communication device of claim 9, wherein the first signaling is a random access response, RAR, signaling, a Msg.4 signaling or a radio resource control, RRC, signaling.

11. The communication device of claim 9, wherein the instructions further comprise:
determining at least one of a plurality of physical DL control channel, PDCCH, candidates of the first Z group CSS, an aggregation level of the first group CSS, and a number of the plurality of PDCCH candidates for the first Z group CSS, according to the first signaling.

12. The communication device of claim 9 or 10, wherein the first DCI comprises an uplink, UL, grant or a DL assignment.

13. The communication device of claim 12, wherein the instructions further comprise:
transmitting a physical UL shared channel, PUSCH, to the BS according to the UL grant; or
receiving a physical DL shared channel, PDSCH, from the BS according to the DL assignment.

14. The communication device of claim 12, wherein the first group CSS is pre-allocated on the first CORESET by the BS.

## Patentansprüche

1. Basisstation bzw. BS (base station) zur Handhabung einer Vielzahl von gemeinsamen Suchräumen bzw. CSS (common search spaces), wobei die BS aufweist:
zumindest eine Speichervorrichtung (210); und
zumindest eine Verarbeitungsschaltung (200), die mit der zumindest einen Speichervorrichtung (210) gekoppelt ist, wobei die zumindest eine Speichervorrichtung (210) Anweisungen speichert und die zumindest eine Verarbeitungsschaltung (200) konfiguriert ist zum Ausführen dieser Anweisungen zum:
Senden (302) einer ersten Signalisierung zum Konfigurieren eines ersten Gruppen-CSS auf einem ersten Steuerressourcensatz bzw. CORESET (control resource set) für eine erste Kommunikationsvorrichtung an die erste Kommunikationsvorrichtung;
Senden (304) einer zweiten Signalisierung zum Konfigurieren eines zweiten Gruppen-CSS auf einem zweiten CORESET für eine zweite Kommunikationsvorrichtung an die zweite Kommunikationsvorrichtung;
Senden (306) einer dritten Signalisierung zum Konfigurieren des ersten Gruppen-CSS auf dem ersten CORESET für die zweite Kommunikationsvorrichtung an die zweite Kommunikationsvorrichtung;
Senden (308) einer ersten Abwärtsstrecke- bzw. DL(Downlink)-Steuerinformation bzw. DCI (DL control information) über den ersten Gruppen-CSS an die erste Kommunikationsvorrichtung und die zweite Kommunikationsvorrichtung; und
Senden (310) einer zweiten DCI an die zweite Kommunikationsvorrichtung über den zweiten Gruppen-CSS.

2. Die BS gemäß Anspruch 1, wobei die erste Signalisierung eine RAR(random access response)-Signalisierung, eine Msg.4-Signalisierung oder eine RRC (Radio Resource Control)-Signalisierung ist.

3. Die BS gemäß Anspruch 1, wobei die erste Signalisierung eine erste Information von zumindest einem einer Zeit-Frequenz-Position des ersten CORESET, einer Vielzahl von physikalischen DL-Steuerkanal- bzw. PDCCH(physical DL control channel)-Kandidaten des ersten Gruppen-CSS, einer Aggregations-Ebene des ersten Gruppen-CSS und einer Anzahl der Vielzahl von PDCCH-Kandidaten für den ersten Gruppen-CSS aufweist.

4. Die BS gemäß Anspruch 1, wobei die zweite Signalisierung eine RAR-Signalisierung, eine Msg.4-Signalisierung oder eine RRC-Signalisierung ist.

5. Die BS gemäß Anspruch 1, wobei die zweite Signalisierung eine zweite Information von zumindest einem einer Zeit-Frequenz-Position des zweiten CORESET, einer Vielzahl von PDCCH-Kandidaten des zweiten Gruppen-CSS, einer Aggregations-Ebene des zweiten Gruppen-CSS und einer Anzahl der Vielzahl von PDCCH-Kandidaten für den zweiten Gruppen-CSS aufweist.

6. Die BS gemäß Anspruch 1, wobei die erste Signalisierung und die dritte Signalisierung eine gleiche Signalisierung sind.

7. Die BS gemäß Anspruch 1, wobei die Anweisungen weiter aufweisen:
Senden der ersten Signalisierung zum Konfigurieren des ersten Gruppen-CSS auf dem ersten CORESET für eine dritte Kommunikationsvorrichtung an die dritte Kommunikationsvorrichtung; und
Senden der ersten DCI über den ersten Gruppen-CSS an die dritte Kommunikationsvorrichtung.

8. Die BS gemäß Anspruch 1, wobei die Anweisungen weiter aufweisen:
Senden der zweiten Signalisierung zum Konfigurieren des zweiten Gruppen-CSS auf dem zweiten CORESET für eine vierte Kommunikationsvorrichtung an die vierte Kommunikationsvorrichtung;
Senden der dritten Signalisierung zum Konfigurieren des ersten Gruppen-CSS auf dem ersten CORESET für die vierte Kommunikationsvorrichtung an die vierte Kommunikationsvorrichtung;
Senden der ersten DCI an die vierte Kommunikationsvorrichtung über den ersten Gruppen-CSS; und
Senden der zweiten DCI an die vierte Kommunikationsvorrichtung über den zweiten Gruppen-CSS.

9. Kommunikationsvorrichtung (20) zur Handhabung einer Vielzahl von gemeinsamen Suchräumen bzw. CSS (common search spaces), wobei die Kommunikationsvorrichtung (20) aufweist:
zumindest eine Speichervorrichtung (210); und
zumindest eine Verarbeitungsschaltung (200), die mit der zumindest einen Speichervorrichtung (210) gekoppelt ist, wobei die zumindest eine Speichervorrichtung (210) Anweisungen speichert und die zumindest eine Verarbeitungsschaltung (200) konfiguriert ist zum Ausführen dieser Anweisungen zum:
Empfangen einer ersten Signalisierung zum Konfigurieren eines ersten Gruppen-CSS auf einem ersten Steuerressourcensatz bzw. CORESET (control resource set) von einer Basisstation bzw. BS (base station);
Empfangen einer zweiten Signalisierung zum Konfigurieren eines zweiten Gruppen-CSS auf einem zweiten Steuerressourcensatz bzw. CORESET (control resource set) von der Basisstation bzw. BS (base station);
Bestimmen einer ersten Zeit-Frequenz-Position des ersten CORESET gemäß der ersten Signalisierung;
Bestimmen einer zweiten Zeit-Frequenz-Position des zweiten CORESET gemäß der zweiten Signalisierung;
Bestimmen des ersten Gruppen-CSS auf dem ersten CORESET gemäß der ersten Signalisierung;
Bestimmen des zweiten Gruppen-CSS auf dem zweiten CORESET gemäß der zweiten Signalisierung;
Decodieren einer ersten Abwärtsstrecke- bzw. DL(Downlink)-Steuerinformation bzw. DCI (DL control information), die über den ersten Gruppen-CSS von der BS empfangen wird; und
Decodieren einer zweiten DCI, die über den zweiten Gruppen-CSS von der BS empfangen wird.

10. Die Kommunikationsvorrichtung gemäß Anspruch 9, wobei die erste Signalisierung eine RAR(Random Access Response)-Signalisierung, eine Msg.4-Signalisierung oder eine RRC (Radio Resource Control)-Signalisierung ist.

11. Die Kommunikationsvorrichtung gemäß Anspruch 9, wobei die Anweisungen weiter aufweisen:
Bestimmen von zumindest einem einer Vielzahl von physikalischen DL-Steuerkanal- bzw. PDCCH(physical DL control channel)-Kandidaten des ersten Gruppen-CSS, einer Aggregations-Ebene des ersten Gruppen-CSS und einer Anzahl der Vielzahl von PDCCH-Kandidaten für den ersten Gruppen-CSS gemäß der ersten Signalisierung.

12. Die Kommunikationsvorrichtung gemäß Anspruch 9 oder 10 wobei die erste DCI eine Aufwärtsstrecke- bzw. UL(uplink)-Erteilung oder eine DL-Zuweisung aufweist.

13. Die Kommunikationsvorrichtung gemäß Anspruch 12, wobei die Anweisungen weiter aufweisen:
Senden eines physikalischen gemeinsam genutzten UL-Kanals bzw. PUSCH (physical UL shared channel) an die BS gemäß der UL-Erteilung; oder
Empfangen eines physikalischen gemeinsam genutzten DL-Kanals bzw. PDSCH (physical DL shared channel) von der BS gemäß der DL-Zuweisung.

14. Die Kommunikationsvorrichtung gemäß Anspruch 12, wobei der erste Gruppen-CSS auf dem ersten CORESET von der BS vorab zugeteilt wird.

## Revendications

1. Station de base, BS, destinée à gérer une pluralité d'espaces de recherche communs, CSS, la BS comprenant :
au moins un dispositif de stockage (210) ; et
au moins un circuit de traitement (200), couplé audit au moins un dispositif de stockage (210), dans laquelle ledit au moins un dispositif de stockage (210) stocke, et ledit au moins un circuit de traitement (200) est configuré pour exécuter, des instructions de :
transmission (302) d'une première signalisation, destinée à configurer un premier CSS de groupe sur un premier ensemble de ressources de commande, CORESET, pour un premier dispositif de communication, au premier dispositif de communication ;
transmission (304) d'une deuxième signalisation, destinée à configurer un deuxième CSS de groupe sur un deuxième CORESET pour un deuxième dispositif de communication, au deuxième dispositif de communication ;
transmission (306) d'une troisième signalisation, destinée à configurer le premier CSS de groupe sur le premier CORESET pour le deuxième dispositif de communication, au deuxième dispositif de communication ;
transmission (308) de premières informations de commande, DCI, de liaison descendante, DL, via le premier CSS de groupe au premier dispositif de communication et au deuxième dispositif de communication ; et
transmission (310) de deuxièmes DCI au deuxième dispositif de communication via le deuxième CSS de groupe.

2. BS selon la revendication 1, dans laquelle la première signalisation est une signalisation de réponse à accès aléatoire, RAR, une signalisation de Msg.4 ou une signalisation de contrôle de ressources radio, RRC.

3. BS selon la revendication 1, dans laquelle la première signalisation comprend des premières informations d'au moins un élément parmi un emplacement temps-fréquence du premier CORESET, une pluralité de candidats de canal de commande de DL physique, PDCCH, du premier CSS de groupe, un niveau d'agrégation du premier CSS de groupe, et un certain nombre de candidats parmi la pluralité de candidats de PDCCH pour le premier CSS de groupe.

4. BS selon la revendication 1, dans laquelle la deuxième signalisation est une signalisation de RAR, une signalisation de Msg.4 ou une signalisation de RRC.

5. BS selon la revendication 1, dans laquelle la deuxième signalisation comprend des deuxièmes informations d'au moins un élément parmi un emplacement temps-fréquence du deuxième CORESET, une pluralité de candidats de PDCCH du deuxième CSS de groupe, un niveau d'agrégation du deuxième CSS de groupe, et un certain nombre de candidats parmi la pluralité de candidats de PDCCH pour le deuxième CSS de groupe.

6. BS selon la revendication 1, dans laquelle la première signalisation et la troisième signalisation sont une même signalisation.

7. BS selon la revendication 1, dans laquelle les instructions comprennent en outre :
la transmission de la première signalisation, destinée à configurer le premier CSS de groupe sur le premier CORESET pour un troisième dispositif de communication, au troisième dispositif de communication ; et
la transmission des premières DCI via le premier CSS de groupe à destination du troisième dispositif de communication.

8. BS selon la revendication 1, dans laquelle les instructions comprennent en outre :
la transmission de la deuxième signalisation, destinée à configurer le deuxième CSS de groupe sur le deuxième CORESET pour un quatrième dispositif de communication, au quatrième dispositif de communication ;
la transmission de la troisième signalisation, destinée à configurer le premier CSS de groupe sur le premier CORESET pour le quatrième dispositif de communication, au quatrième dispositif de communication ;
la transmission des premières DCI au quatrième dispositif de communication via le premier CSS de groupe ; et
la transmission des deuxièmes DCI au quatrième dispositif de communication via le deuxième CSS de groupe.

9. Dispositif de communication (20) destiné à gérer une pluralité d'espaces de recherche communs, CSS, le dispositif de communication (20) comprenant :
au moins un dispositif de stockage (210) ; et
au moins un circuit de traitement (200), couplé audit au moins un dispositif de stockage (210), dans lequel ledit au moins un dispositif de stockage (210) stocke, et ledit au moins un circuit de traitement (200) est configuré pour exécuter, des instructions de :
réception d'une première signalisation, destinée à configurer un premier CSS de groupe sur un premier ensemble de ressources de contrôle, CORESET, en provenance d'une station de base, BS ;
réception d'une deuxième signalisation, destinée à configurer un deuxième CSS de groupe sur un deuxième ensemble de ressources de contrôle, CORESET, en provenance de la station de base, BS ;
détermination d'un premier emplacement temps-fréquence du CORESET en fonction de la première signalisation ;
détermination d'un deuxième emplacement temps-fréquence du CORESET en fonction de la deuxième signalisation ;
détermination du premier CSS de groupe sur le premier CORESET en fonction de la première signalisation ;
détermination du deuxième CSS de groupe sur le deuxième CORESET en fonction de la deuxième signalisation ;
décodage de premières informations de commande, DCI, de liaison descendante, DL, reçues via le deuxième CSS de groupe en provenance de la BS ; et
décodage de deuxièmes DCI reçues via le deuxième CSS de groupe en provenance de la BS.

10. Dispositif de communication selon la revendication 9, dans lequel la première signalisation est une signalisation de réponse à accès aléatoire, RAR, une signalisation de Msg.4 ou une signalisation de contrôle de ressources radio, RRC.

11. Dispositif de communication selon la revendication 9, dans lequel les instructions comprennent en outre :
la détermination d'au moins un candidat parmi une pluralité de candidats de canal de commande de DL physique, PDCCH, du premier CSS de groupe, un niveau d'agrégation du premier CSS de groupe, et un certain nombre de candidats parmi la pluralité de candidats de PDCCH pour le premier CSS de groupe, en fonction de la première signalisation.

12. Dispositif de communication selon la revendication 9 ou 10, dans lequel les premières DCI comprennent un accord de liaison montante, UL, ou une affectation de DL.

13. Dispositif de communication selon la revendication 12, dans lequel les instructions comprennent en outre :
la transmission d'un canal partagé d'UL physique, PUSCH, à la BS en fonction de l'accord d'UL ; ou
la réception d'un canal partagé de DL physique, PDSCH, en provenance de la BS en fonction de l'affectation de DL.

14. Dispositif de communication selon la revendication 12, dans lequel le premier CSS de groupe est préalloué sur le premier CORESET par la BS.
